# EUROPEAN PATENT SPECIFICATION

(11) **EP 1 064 628 B1**
(45) Date of publication and mention of the grant of the patent: **21.11.2001**
(21) Application number: 99916828.9
(22) Date of filing: 16.03.1999
(51) Int. Cl.: G07F 13/02

(54) **ALLOWING TO PROVIDE SERVICE AND CHARGING COSTS ASSOCIATED WITH THE SERVICE**
ERLAUBEN DER BEREITSTELLUNG EINER DIENSTLEISTUNG UND MIT DIESER DIENSTLEISTUNG VERBUNDENE KOSTENABRECHNUNG
SYSTEME POUR FOURNIR UN SERVICE ET FACTURER LES COUTS LIES A CE SERVICE

(30) Priority: 19.03.1998 EP 98302064
(43) Date of publication of application: 03.01.2001
(73) Proprietor: SHELL INTERNATIONALE RESEARCH MAATSCHAPPIJ B.V., 2596 HR Den Haag (NL)
(72) Inventor: BANNELL, John, Lesley, Kingsford, Ince, Chester, Cheshire CH2 4NU (GB)
(86) International application number: EP9901791
(87) International publication number: WO9948066

(56) References cited:
- EP-A- 0 461 888
- EP-A- 0 476 858
- WO-A-97/35284
- WO-A-98/00817
- BE-A- 1 009 253
- CH-A- 685 047
- DE-A- 19 541 672
- GB-A- 2 176 374
- US-A- 4 072 929

## Description

The present invention relates to allowing to provide service at a service area of a fuel retail station. The service can be provided to the vehicle, for example refuelling the vehicle at the fuel dispenser or washing it at the car wash station, or to the customer, for example selling goods at a service shop at the fuel retail station. The present invention also relates to automatically charging the costs associated with the service.

USA patent specification No. 4 072 929 relates to a system for allowing to provide service to a vehicle or to a customer, which system comprises means for providing service to the vehicle, a vehicle recognition system in the form of a data entry terminal where a code identifying the vehicle has to be entered, a customer recognition system in the form of the data entry terminal where a code identifying the customer has to be entered, a data processing means which is connected to the recognition systems so as to receive the codes, which data processing means includes a storage device including records containing codes of the vehicle and the related customer, a system for comparing the codes of the vehicle and the customer with the stored codes, and means for allowing the service to be provided when the entered codes agree to one set of characteristic data of the vehicle and the related customer.

It is an object of the present invention to provide simple system for allowing to provide service to a vehicle or to a customer, which system is secure and requires little activities of the customer, and which does not require entering data.

To this end the system for automatically charging the costs associated with providing service to a vehicle or to a customer according to the present invention comprises means for providing service to the vehicle or to the customer, a vehicle recognition system capable of producing characteristic vehicle data, a customer recognition system capable of producing characteristic customer data, a data processing means which is connected to the recognition systems so as to receive the characteristic data, which data processing means includes a storage device including records containing characteristic data of the vehicle and the related customer, a system for comparing the produced characteristic data of the vehicle and the customer with the stored characteristic data, and means for allowing the service to be provided when the produced characteristic data agree to one set of characteristic data of the vehicle and the related customer, wherein the storage device includes vehicle-customer information records each relating the characteristic data of a vehicle to the characteristic data of a customer, and wherein the system for comparing the produced characteristic data of the vehicle and the customer with the stored characteristic data comprises a retrieval system for retrieving the characteristic data of the customer(s) belonging to the produced characteristic data of the vehicle, and a system which compares the produced characteristic customer data to the retrieved characteristic data of the customer(s) and which transmits an enabling signal to the means for allowing the service to be provided when the produced characteristic customer data agree to the retrieved characteristic data of one customer.

The system according to the present invention ensures that the service can only be provided if the data agree so that the vehicle has been recognized and also the customer related to that particular vehicle, or vice versa. When the data do not agree, the providing the service is prevented. Any customer can be linked to a number of vehicles, or a vehicle to a number of customers as required.

The vehicle recognition system is suitably an optical recognition system. Such an optical recognition system comprises an electronic camera, which produces an image of an object and a recognition system, which recovers relevant information from the image to produce the characteristic data of the object. The relevant information can relate to the information of the licence plate (or registration plate) optionally with information on the type and colour of the vehicle and the produced characteristic vehicle data. The vehicle recognition system is so positioned that it can capture the vehicle when present at the service area. A system for optical recognition of characteristic features of a vehicle, for example the licence plate, is known, see for example USA patent specification No. 5 381 155.

The customer recognition system is suitably a recognition system that is capable of recognizing an object, such as an optical recognition system, which captures at least part of the customer, for example the face, and which is capable of producing characteristic customer data. The customer recognition system is so positioned that it can capture the customer at any point where service is provided, for example the fuel dispenser, the counter of the service shop, the entrance of the car wash.

Alternatively, the recognition system is a palm print recognition system or a finger print recognition system, wherein an image of the hand palm or the finger is produced from which a recognition system, which recovers relevant information so as to produce the characteristic customer data. Such a system may be fitted to the fuel dispenser or it may be incorporated in the handle of the fuel filler nozzle. The customer recognition system may also be a system based on the recognition of the iris pattern of the eye, comprising a detailed iris pattern capture camera fitted to the fuel dispenser.

Suitably, the system further comprises means for charging the costs associated with the service to an account.

The storage device includes vehicle-customer information records each relating the characteristic data of a vehicle to the characteristic data of a customer. These data have to be entered into the storage device before any transaction can automatically be handled. The vehicle-customer information records thus relate vehicle data to data of an authorized customer to form a set of characteristic data of the vehicle and the related authorised customer. When there are more customers authorized for one vehicle, the characteristic data of the vehicle will be related to the characteristic data of each of the authorized customers; in this way sets are created of characteristic data of the vehicle and the related customer. In the same way sets can be formed when one customer is authorized for two or more vehicles.

Suitably the system for comparing the produced characteristic data of the vehicle and the customer with the stored characteristic data comprises a retrieval system for retrieving the characteristic data of the customer(s) belonging to the produced characteristic data of the vehicle, and a system which compares the produced characteristic customer data to the retrieved characteristic data of the customer(s) and which transmits an enabling signal to the means for allowing the service to be provided when the produced characteristic customer data agree to the retrieved characteristic data of one customer.

In order to allow charging the costs, the storage device further contains records each relating the characteristic data of a customer to the account to which the costs are to be charged.

The invention further relates to a method of allowing to provide service to a vehicle or a customer, wherein a data processing means is provided that includes a storage device including records containing characteristic data of the vehicle and the related customer, which method comprises according to the invention the steps of
(a) producing characteristic vehicle data of the vehicle to be serviced;
(b) producing characteristic customer data of the customer pertaining to the vehicle;
(c) comparing the produced characteristic vehicle data with stored characteristic vehicle data so as to retrieve stored characteristic data of the customer related to the vehicle, if the vehicle data agree;
(d) comparing the produced characteristic customer data with the retrieved characteristic customer data; and
(e) allowing the service to be provided if the customer data agree.

Suitably the method further comprises the step of charging the costs associated with the service to an account.

The use of two distinct recognition systems allows verification in two-stages: at first the characteristic data of the customer(s) authorized for a particular vehicle which is retrieved from the produced characteristic data of the vehicle, and then, the produced characteristic customer data are compared with the retrieved characteristic data of the authorized customer(s). Because the amount of data required to characterize a vehicle will be less than the amount of data required to characterize a person, the verification in two stages is very efficient. This is particularly relevant when the data processing means is a central data processing means which is connected to the particular service station, wherein the connection is an on-line connection or a connection through a satellite.

The coupling of these two recognition systems provides an enhanced level of security to the customer and vendor over use of either system independently.

An advantage of the system is that it permits the customer to access the facilities of the retail station without the need for any personalised electronic or card based identification or transaction system to be carried by the customer or attached to the vehicle, as long as both the vehicle and customer can be identified by their respective characteristics at any given time.

## Claims

1. A system for allowing to provide service to a vehicle or to a customer, which system comprises means for providing service to the vehicle or to the customer, a vehicle recognition system capable of producing characteristic vehicle data, a customer recognition system capable of producing characteristic customer data, a data processing means which is connected to the recognition systems so as to receive the characteristic data, which data processing means includes a storage device including records containing characteristic data of the vehicle and the related customer, a system for comparing the produced characteristic data of the vehicle and the customer with the stored characteristic data, and means for allowing the service to be provided when the produced characteristic data agree to one set of characteristic data of the vehicle and the related customer, wherein the storage device includes vehicle-customer information records each relating the characteristic data of a vehicle to the characteristic data of a customer, and wherein the system for comparing the produced characteristic data of the vehicle and the customer with the stored characteristic data comprises a retrieval system for retrieving the characteristic data of the customer(s) belonging to the produced characteristic data of the vehicle, and a system which compares the produced characteristic customer data to the retrieved characteristic data of the customer(s) and which transmits an enabling signal to the means for allowing the service to be provided when the produced characteristic customer data agree to the retrieved characteristic data of one customer.

2. The system according to claim 1, further comprising means for charging the costs associated with the service to an account.

3. The system according to claim 1 or 2, further comprising means for charging the costs associated with the service to an account, wherein the storage device further contains records each relating the characteristic data of a customer to the account to which the costs are to be charged.

4. A method of allowing to provide service to a vehicle or a customer, wherein a data processing means is provided that includes a storage device including records containing characteristic data of the vehicle and the related customer, which method comprises the steps of
(a) producing characteristic vehicle data of the vehicle to be serviced;
(b) producing characteristic customer data of the customer pertaining to the vehicle;
(c) comparing the produced characteristic vehicle data with stored characteristic vehicle data so as to retrieve stored characteristic data of the customer related to the vehicle, if the vehicle data agree;
(d) comparing the produced characteristic customer data with the retrieved characteristic customer data; and
(e) allowing the service to be provided if the customer data agree.

5. Method according to claim 4, further comprising charging the costs associated with the service to an account.

## Patentansprüche

1. System zum Gestatten der Erbringung einer Dienstleistung an einem Fahrzeug oder einem Kunden, welches System Mittel zum Erbringen der Dienstleistung an dem Fahrzeug oder dem Kunden, ein Fahrzeugerkennungssystem, das Fahrzeugkenndaten erzeugen kann, ein Kundenerkennungssystem, das Kundenkenndaten erzeugen kann, Datenverarbeitungsmittel, die an die Erkennungssysteme angeschlossen sind, um die Kenndaten zu empfangen, und die eine Speichereinrichtung mit Kenndaten des Fahrzeuges und des verknüpften Kunden enthaltenden Datensätzen enthalten, ein System zum Vergleichen der erzeugten Kenndaten des Fahrzeuges und des Kunden mit den gespeicherten Kenndaten, und Mittel zum Gestatten der Erbringung der Dienstleistung, wenn die erzeugten Kenndaten mit einem Satz von Kenndaten des Fahrzeuges und des verknüpften Kunden übereinstimmen umfaßt, wobei die Speichereinrichtung Fahrzeug-Kunden-Informationsdatensätze enthält, die jeweils die Kenndaten eines Fahrzeuges mit den Kenndaten eines Kunden verknüpfen, und wobei das System zum Vergleichen der erzeugten Kenndaten des Fahrzeuges und des Kunden mit den gespeicherten Kenndaten ein Wiederauffindsystem zum Wiederauffinden der Kenndaten des bzw. der zu den erzeugten Kenndaten des Fahrzeuges gehörenden Kunden umfaßt, und ein System, welches die erzeugten Kundenkenndaten mit den wiederaufgefundenen Daten des bzw. der Kunden vergleicht und ein Freigabesignal an die Mittel zum Gestatten der Erbringung der Dienstleistung sendet, wenn die erzeugten Kundenkenndaten mit den wiederaufgefundenen Kenndaten eines Kunden übereinstimmen.

2. System nach Anspruch 1, ferner mit Mitteln zum Verrechnen der mit der Dienstleistung verbundenen Kosten auf ein Konto.

3. System nach Anspruch 1 oder 2, ferner mit Mitteln zum Verrechnen der mit der Dienstleistung verbundenen Kosten auf ein Konto, wobei die Speichereinrichtung ferner Datensätze enthält, die jeweils die Kenndaten eines Kunden mit dem Konto verknüpfen, auf welches die Kosten verrechnet werden sollen.

4. Verfahren zum Gestatten der Erbringung einer Dienstleistung an einem Fahrzeug oder einem Kunden, wobei Datenverarbeitungsmittel vorgesehen sind, die eine Speichereinrichtung mit die Kenndaten des Fahrzeuges und des verknüpften Kunden enthaltenden Datensätzen enthalten, welches Verfahren die Schritte umfaßt:
(a) Erzeugen von Fahrzeugkenndaten des Fahrzeuges, an dem die Dienstleistung erbracht werden soll;
(b) Erzeugen von Kundenkenndaten des zu dem Fahrzeug gehörenden Kunden;
(c) Vergleichen der erzeugten Fahrzeugkenndaten mit gespeicherten Fahrzeugkenndaten, um die gespeicherten Kenndaten des mit dem Fahrzeug verknüpften Kunden aufzufinden, wenn die Fahrzeugdaten übereinstimmen;
(d) Vergleichen der erzeugten Kundenkenndaten mit den wiederaufgefundenen Kenndaten; und
(e) Gestatten der Erbringung der Dienstleistung, wenn die Kundendaten übereinstimmen.

5. Verfahren nach Anspruch 4, ferner mit dem Schritt des Verrechnens der mit der Dienstleistung verbundenen Kosten auf ein Konto.

## Revendications

1. Système destiné à permettre de fournir un service à un véhicule ou à un client, lequel système comprend des moyens pour fournir un service au véhicule ou au client, un système de reconnaissance des véhicules capable de produire les données caractéristiques du véhicule, un système de reconnaissance des clients capable de produire les données caractéristiques du client, un moyen de traitement des données qui est connecté aux systèmes de reconnaissance de manière à recevoir les données caractéristiques, lequel moyen de traitement des données comprend un dispositif de stockage comprenant des enregistrements contenant les données caractéristiques du véhicule et du client y relatif, un système pour comparer les données caractéristiques produites du véhicule et du client avec les données caractéristiques stockées, et des moyens pour permettre au service d'être fourni quand les données caractéristiques produites concordent avec un jeu de données caractéristiques du véhicule et du client y relatif, dans lequel le dispositif de stockage comprend des enregistrements d'informations sur les véhicules et les clients, chacun d'eux mettant en relation les données caractéristiques d'un véhicule avec les données caractéristiques d'un client, et dans lequel le système pour comparer les données caractéristiques produites du véhicule et du client avec les données caractéristiques stockées comprend un système de récupération pour récupérer les données caractéristiques du (des) client(s) allant avec les données caractéristiques produites du véhicule, et un système qui compare les données caractéristiques produites du client avec les données caractéristiques récupérées du (des) client(s) et qui transmet un signal de validation au moyen permettant au service d'être fourni quand les données caractéristiques produites du client concordent avec les données caractéristiques récupérées d'un client.

2. Système selon la revendication 1, comprenant en outre des moyens pour imputer les coûts associés au service sur un compte.

3. Système selon la revendication 1 ou 2, comprenant en outre des moyens pour imputer les coûts associés au service sur un compte, dans lequel le dispositif de stockage contient en outre des enregistrements mettant en rapport les données caractéristiques d'un client avec le compte sur lequel les coûts sont à imputer.

4. Procédé pour permettre de fournir un service à un véhicule ou un client, dans lequel il est prévu un moyen de traitement des données qui comprend un dispositif de stockage comprenant des enregistrements contenant les données caractéristiques du véhicule et du client y relatif, lequel procédé comprend les étapes consistant à
(a) produire les données caractéristiques du véhicule à servir,
(b) produire les données caractéristiques du client se rapportant au véhicule,
(c) comparer les données caractéristiques produites du véhicule avec les données caractéristiques stockées du véhicule afin de récupérer les données caractéristiques stockées du client se rapportant au véhicule, si les données du véhicule concordent;
(d) comparer les données caractéristiques produites du client avec les données caractéristiques récupérées du client, et
(e) permettre au service d'être fourni si les données du client concordent.

5. Procédé selon la revendication 4, comprenant en outre l'imputation des coûts associés au service sur un compte.
